# EUROPÄISCHE PATENTANMELDUNG

(11) **EP 3 530 527 A1**
(43) Veröffentlichungstag der Anmeldung: **28.08.2019**
(21) Anmeldenummer: 19000043.0
(22) Anmeldetag: 28.01.2019
(51) Int. Cl.: B60R 25/20, B60Q 1/26, E05F 15/74

(54) **OPTISCHES SENSORSYSTEM EINES KRAFTFAHRZEUGS ZUR ERFASSUNG VON BEDIENGESTEN**

(30) Priorität: 21.02.2018 DE 102018001391
(71) Anmelder: Huf Hülsbeck & Fürst GmbH & Co. KG, 42551 Velbert (DE)
(72) Erfinder: Ulomek, Peter, 42477 Radevormwald (DE); Thau, Wolfgang, 58285 Gevelsberg (DE)
(74) Vertreter: Patentanwaltskanzlei Methling

(57) **Zusammenfassung**

Die Erfindung betrifft ein Sensorsystem (10) eines Kraftfahrzeugs. (20) umfassend eine in einem Sensorgehäuse (40) untergebrachte Sensoreinrichtung (30) mit zumindest einer Orientierungslichtquelle (35) und einer Mehrzahl von Sensoren (31, 33) zum optischen Erfassen von Objekten und deren räumlichen Bewegungen und eine Halteeinrichtung (42) zum Aufnehmen des Sensorgehäuses (40) und zum Befestigen des Sensorgehäuses (40) an einem ersten Bauteil (21) des Kraftfahrzeugs (20). Die Orientierungslichtquelle (35) und jeder der Mehrzahl von Sensoren (31, 33) der Sensoreinrichtung (30) ist jeweils mit einem ersten Ende (51) eines Lichtleiters (50) verbunden. Ein zweites Ende (52) des Lichtleiters (50), das dem ersten Ende (51) gegenüberliegt, ist derart an einem zweiten Bauteil (22) des Kraftfahrzeugs (20) angeordnet, dass Licht aus dem Lichtleiter (50) in die äußere Umgebung des Kraftfahrzeugs (20) austreten kann und/oder aus der äußeren Umgebung des Kraftfahrzeugs (20) in den Lichtleiter (50) eintreten kann.

## Beschreibung

Die Erfindung bezieht sich auf ein Sensorsystem eines Kraftfahrzeugs umfassend eine in einem Sensorgehäuse untergebrachte Sensoreinrichtung mit einer Orientierungslichtquelle und einer Mehrzahl von Sensoren zum optischen Erfassen von Objekten und deren räumlichen Bewegungen und eine Halteeinrichtung zum Aufnehmen des Sensorgehäuses und zum Befestigen des Sensorgehäuses an einem ersten Bauteil des Kraftfahrzeugs.

Sensorsysteme sorgen zur Erhöhung der Sicherheit und des Bedienkomforts an zahlreichen Stellen von modernen Kraftfahrzeugen für eine Erkennung von Bediengesten. Beispielsweise verfügen zahlreiche Kraftfahrzeuge über Sensoranordnungen in den Türgriffen, um eine Annäherung eines Benutzers an den Türgriff zu erfassen und nach einer Überprüfung der Zugriffsberechtigung die Tür zu entsperren. Im Bereich der Heckklappen von Kraftfahrzeugen werden Sensorsysteme eingesetzt, welche eine berührungslose Betätigung der Heckklappenöffnung ermöglichen. Dies ist insbesondere dann vorteilhaft, wenn ein Benutzer beispielsweise mit Ladegut belastet ist und eine händische Betätigung der Heckklappe nicht möglich ist. Der Benutzer kann dann z. B. mit den Beinen eine Bewegungsgeste im Bereich der Heckklappe, z. B. unterhalb des Stoßfängers ausführen. Sensorsysteme im Heckklappenbereich erfassen diese Bewegungsgeste und öffnen die Heckklappe, sofern die Geste als gültige Betätigungsgeste erkannt werden kann.

Sensorsysteme mit Sensoreinrichtungen, die zur optisch gestützten Erkennung von Bedienungsgesten oder Bedienungshandlungen an Kraftfahrzeugen eingesetzt werden, sind aus dem Stand der Technik bekannt. Solche Sensoreinrichtungen ermöglichen das Erfassen und Auswerten von zeitlich und räumlich aufgelösten Informationen, um den Bedienwillen eines Benutzers eines Kraftfahrzeugs in Form einer Geste oder Handlung zu erkennen.

Die DE 10 2008 025 669 A1 offenbart einen optischen Sensor, welcher eine Geste detektiert, woraufhin ein Schließelement eines Fahrzeugs automatisch bewegt wird.

Die WO 2012/084222 A1 offenbart einen optischen Sensor zur Betätigung und Überwachung eines Schließelements.

Ein Sensorsystem der eingangs bezeichneten Art ist ferner aus der DE 10 2013 108 824 A1 bekannt. Bei diesem Sensorsystem ist die Sensoreinrichtung mitsamt der Pulslichtquelle und der Empfangs- bzw. Erfassungseinrichtung zu einer Einheit in einem Sensorgehäuse integriert, welches am Kraftfahrzeug montierbar ist. Das Sensorgehäuse schützt und hält die Lichtquelle und Erfassungseinrichtung und richtet diese aus. Dabei ist das Sensorgehäuse so zur Befestigung an einem Kraftfahrzeug ausgebildet, dass das Sensorgehäuse entlang einer Anlagefläche des Kraftfahrzeugs angeordnet wird. Die Anlagefläche wird durch die Bodenkontur eines Aufnahmeraumes, z.B. einer Aussparung am Kraftfahrzeug gebildet.

Nachteilig bei den bekannten Sensorsystemen ist es, dass die Form des Sensorgehäuses der Anlagefläche des jeweiligen Kraftfahrzeugtyps angepasst werden muss.

Der Erfindung liegt die Aufgabe zugrunde, eine Lösung zu schaffen, die auf konstruktiv einfache Weise ein Sensorsystem bereitstellt, welches das aus dem Stand der Technik bekannte Problem vermeidet und für unterschiedlichste Kraftfahrzeugtypen, d.h. für Fahrzeuge verschiedener Hersteller und für unterschiedliche Kraftfahrzeugmodelle universell einsetzbar ist.

Diese Aufgabe wird erfindungsgemäß durch ein Sensorsystem gemäß Anspruch 1 gelöst. Vorteilhafte Weiterbildungen der Erfindung sind in den abhängigen Ansprüchen angegeben.

Besonders vorteilhaft bei dem Sensorsystem eines Kraftfahrzeugs umfassend eine in einem Sensorgehäuse untergebrachte Sensoreinrichtung mit zumindest einer Orientierungslichtquelle und einer Mehrzahl von Sensoren zum optischen Erfassen von Objekten und deren räumlichen Bewegungen und eine Halteeinrichtung zum Aufnehmen des Sensorgehäuses und zum Befestigen des Sensorgehäuses an einem ersten Bauteil des Kraftfahrzeugs ist es, dass die Orientierungslichtquelle und jeder der Mehrzahl von Sensoren der Sensoreinrichtung jeweils mit einem ersten Ende eines insbesondere flexiblen Lichtleiters verbunden ist und ein zweites Ende des insbesondere flexiblen Lichtleiters, das dem ersten Ende gegenüberliegt, derart an einem zweiten Bauteil des Kraftfahrzeugs angeordnet ist, dass Licht aus dem Lichtleiter in die äußere Umgebung des Kraftfahrzeugs austreten kann und/oder aus der äußeren Umgebung des Kraftfahrzeugs in den Lichtleiter eintreten kann.

Im erfindungsgemäßen Sinne ist dabei mit dem Begriff der äußeren Umgebung des Kraftfahrzeugs auch der Innenraum des Kraftfahrzeuges für jene Anwendungen der Erfindung mit umfasst, bei denen das Sensorsystem im Innenraum des Kraftfahrzeuges eingesetzt wird. Die Erfindung ist somit nicht auf Anwendungen beschränkt, bei denen eine Anordnung zur äußeren Umgebung des Kraftfahrzeuges erfolgt. Der Begriff der äußeren Umgebung bezieht sich somit auf das zweite Bauteil des Kraftfahrzeuges, an dem das zweite Enden des insbesondere flexiblen Lichtleiters angeordnet ist, und umfasst somit neben der tatsächlichen äußeren Umgebung des Kraftfahrzeuges auch den Innenraum des Kraftfahrzeuges.

Durch eine in den Innenraum des Kraftfahrzeuges gerichtete Anordnung des zweiten Bauteils können auch Bediengesten eines Benutzers des Fahrzeuges im Kraftfahrzeuginnenraum mit dem erfindungsgemäßen Sensorsystem erfasst werden.

Durch das Verbinden jedes Sensors einer Mehrzahl von Sensoren, vorzugsweise optischen Sensoren, mit einem Lichtleiter gemäß einer Ausführungsform der vorliegenden Erfindung wird der Lichtaustritt bzw. der Lichteintritt von der Sensorik getrennt, wodurch ermöglicht wird, dass die Sensoreinrichtung an einer beliebigen Stelle im Fahrzeug angeordnet und montiert sein kann. Erfindungsgemäß ist somit jede Lichtquelle und jeder Sensor der Sensoreinrichtung mit jeweils einem insbesondere flexiblen Lichtleiter gekoppelt. Da das Gehäuse und die Halteeinrichtung der Sensoreinrichtung durch das Verwenden von Lichtleitern nicht mehr an ein spezielles Bauteil des Fahrzeugs, wie beispielsweise einen heckseitigen Stoßfänger oder ein heckseitiges Karosseriebauteil, angepasst werden muss, können das Sensorgehäuse, in dem die Sensoreinrichtung untergebracht ist, und die Halteeinrichtung zum Aufnehmen des Sensorgehäuses unter Verwendung von Standardbauteilen relativ einfach gestaltet sein. Vorzugsweise kann das Sensorgehäuse, in dem die Sensoreinrichtung untergebracht ist, ausgebildet sein, um mit wenigen einfachen Handgriffen und ohne Verwendung von Werkzeugen in die Halteeinrichtung eingesetzt werden zu können bzw. aus dieser entnommen werden zu können. Hierzu kann das Sensorgehäuse formschlüssig und/oder kraftschlüssig insbesondere in entsprechenden Aufnahmen eingeclipst sein. Das erste Bauteil, an dem die Sensoreinrichtung befestigt ist, kann an einer beliebigen Stelle in dem Fahrzeug, beispielsweise in einer Tür, angeordnet sein. Eine größere Durchbrechung in einem äußeren, insbesondere heckseitigen Bauteil des Kraftfahrzeugs zur Aufnahme der Sensoreinrichtung und einer Halteeinrichtung für diese ist gemäß den Ausführungsformen der vorliegenden Erfindung nicht mehr erforderlich.

Die Erfindung erlaubt daher, ein Sensorsystem der eingangs genannten Art auf einfache Art und Weise zu montieren, ohne dass eine Anpassung des Sensorgehäuses an verschiedene Kraftfahrzeugtypen, d.h. für Fahrzeuge verschiedene Hersteller und für unterschiedliche Modelle eines Herstellers nicht notwendig ist. Die Montage der Sensoreinrichtung ist dadurch an einer beliebigen Stelle im Fahrzeug möglich.

Die Lichtleiter sind vorzugsweise durch flexible Lichtleiter gebildet, wodurch diese problemlos von der an dem ersten Bauteil des Kraftfahrzeugs befestigten Sensoreinrichtung zu einem zweiten Bauteil des Kraftfahrzeugs geführt werden können. An dem zweiten Bauteil des Kraftfahrzeugs sind die Lichtleiter bevorzugt derart angeordnet und befestigt, dass Licht aus diesen in die äußere oder innere Umgebung des Kraftfahrzeugs austreten und/oder aus der äußeren oder der inneren Umgebung des Kraftfahrzeugs in diese eintreten kann. Die Erfindung kann somit sowohl für Anwendungen mit einer Anordnung zur äußeren Umgebung des Kraftfahrzeugs hin eingesetzt werden, als auch für Anwendungen mit einer Anordnung zur inneren Umgebung des Kraftfahrzeugs hin, d.h. in den Innenraum des Kraftfahrzeugs gerichtet, eingesetzt werden.

Durch die Trennung der Sensorik von dem Lichtaustritt bzw. dem Lichteintritt wird die Montage der Sensoreinrichtung gegenüber dem bekannten Stand der Technik wesentlich vereinfacht und Montagezeit und -kosten können eingespart werden.

In einer bevorzugten Ausführungsform ist das erste Bauteil des Kraftfahrzeugs im Inneren des Kraftfahrzeugs angeordnet. Insbesondere kann das erste Bauteil des Kraftfahrzeugs ein Blech der Struktur des Fahrzeugs sein. Das erste Bauteil des Kraftfahrzeugs, an dem die Sensoreinrichtung gemäß einer Ausführungsform der vorliegenden Erfindung befestigt ist, wird insbesondere so ausgewählt, dass es relativ einfach zugängig und erschütterungsarm oder erschütterungsfrei ist. Somit ist das Sensorsystem gemäß der vorliegenden Erfindung Erschütterungen gegenüber unempfindlicher als Sensorsysteme nach dem Stand der Technik, Das Sensorgehäuse ist vorzugsweise lösbar an der Halteeinrichtung befestigt. Dies kann über einen Formschluss und/oder Kraftschluss erfolgen.

In einer weiteren bevorzugten Ausführungsform ist das zweite Ende des Lichtleiters flächenbündig mit einer insbesondere nach außen zeigenden Oberfläche des zweiten Bauteils des Kraftfahrzeugs angeordnet, wodurch ermöglicht wird, dass vom einem Sensor ausgegebenes Licht aus dem Lichtleiter in die äußere Umgebung oder den Innenraum des Kraftfahrzeugs , austreten kann und/oder aus der äußeren Umgebung oder dem Innenraum des Kraftfahrzeugs in den Lichtleiter eintreten kann, um zu einem lichtempfangenden Sensor übertragen zu werden. Der Begriff der nach außen zeigenden Oberfläche bezieht sich dabei auf die Einbausituation im Kraftfahrzeug und weist somit in die Umgebung des Kraftfahrzeuges oder in den Innenraum des Kraftfahrzeuges.

Das zweite Bauteil, welches die zweiten Enden des/der Lichtleiter/s aufnimmt, kann somit nach außen in die Umgebung des Fahrzeuges oder alternativ in den Innenraum des Fahrzeuges gerichtet sein. Insbesondere kann das zweite Bauteil in oder an einer Seitentür des Kraftfahrzeuges und/oder in oder an einer Türsäule des Kraftfahrzeuges angeordnet sein.

In einer weiteren bevorzugten Ausführungsform ist das zweite Ende des Lichtleiters von einer Platte aufgenommen, die flächenbündig mit der insbesondere nach außen zeigenden Oberfläche des zweiten Bauteils des Kraftfahrzeugs angeordnet ist. Durch die Verwendung einer solchen Platte wird eine einfache Montage der Lichtleiter an dem zweiten Bauteil des Kraftfahrzeugs ermöglicht. Zum anderen kann die Platte so gestaltet werden, dass sich diese optisch an die nach außen zeigende Oberfläche des zweiten Bauteils des Kraftfahrzeugs anpasst, wodurch eine optische Einbindung der Platte in das zweite Bauteil des Fahrzeugs mit einfachen Mitteln möglich wird. Vorzugsweise weist die Platte zumindest eine nach außen zeigenden Oberfläche auf, die im Wesentlichen eben und glatt ist und die farblich der Farbe des zweiten Bauteils, an dem diese befestigt ist, angepasst ist.

In einer weiteren bevorzugten Ausführungsform weist die Platte eine Sensoroptik auf, die das aus dem zweiten Ende des Lichtleiters austretende Licht verteilt und/oder das in das zweite Ende des Lichtleiters eintretende Licht sammelt. Die Sensoroptik kann individuelle optische Linsen oder Linsenpakete für jeden verwendeten Lichtleiter aufweisen. Die bereitgestellte Sensoroptik kann der Aufweitung, Sammlung, Umlenkung und/oder Fokussierung des austretenden Lichts dienen. Insbesondere umfasst die Sensoroptik sowohl Beleuchtungsoptik wie auch Erfassungsoptik.

In einer weiteren bevorzugten Ausführungsform weist das zweite Bauteil eine Öffnung auf, die für die Aufnahme der Platte ausgebildet ist. Die Öffnung ist insbesondere so dimensioniert, dass sie den Abmessungen der Platte entspricht, die in diese eingesetzt wird. Das Aufnehmen der Platte in die Öffnung kann formschlüssig und/oder kraftschlüssig erfolgen.

In einer weiteren bevorzugten Ausführungsform befindet sich das zweite Bauteil am Heck des Fahrzeugs und die Öffnung ist in Bezug auf das Heck des Fahrzeugs mittig oder außermittig angeordnet. Durch eine außermittige Anordnung der Öffnung wird eine Beeinträchtigung der Arbeitsweise der Sensoreinrichtung durch eventuelle weitere Bauteile des Kraftfahrzeugs, wie beispielsweise eine Anhängerkupplung vermieden.

In einer weiteren bevorzugten Ausführungsform ist das zweite Bauteil des Kraftfahrzeugs ein heckseitiger Stoßfänger oder ein heckseitiges Karosseriebauteil, an dem das zweite Ende des Lichtleiters derart angeordnet ist, dass Licht insbesondere nach unten aus dem Lichtleiter in die äußere Umgebung des Kraftfahrzeugs austreten kann und/oder insbesondere von unten aus der äußeren Umgebung des Kraftfahrzeugs in den Lichtleiter eintreten kann. Dies ist insbesondere vorteilhaft, wenn ein Objekt oder eine räumliche Bewegung auf dem Boden oder in kurzem Abstand über dem Boden erfasst werden soll. Insbesondere kann das aus dem Lichtleiter austretende Licht durch diese Anordnung möglichst direkt und in kurzer Entfernung den Boden erreichen, wodurch die die Mehrzahl der Sensoren der Sensoreinrichtung mit geringerer Leistung betrieben werden kann.

In einer weiteren bevorzugten Ausführungsform umfasst die Sensoreinrichtung eine Orientierungslichtquelle, die Licht im sichtbaren Bereich ausgibt, einen ersten Sensor, der Licht im nichtsichtbaren Bereich, insbesondere im Infrarotbereich, ausgibt, und einen zweiten Sensor zum Empfangen von reflektiertem Licht im nichtsichtbaren Bereich, insbesondere im Infrarotbereich, wobei die Orientierungslichtquelle, der erste Sensor und der zweite Sensor jeweils mit einem Lichtleiter verbunden sind.

In einer weiteren bevorzugten Ausführungsform weisen der erste Sensor einen Strahlungsbereich und der zweite Sensor einen Erfassungsbereich auf, wobei der Erfassungsbereich des zweiten Sensors teilweise oder vollständig überlappend dem Strahlungsbereich des ersten Sensors entspricht, wobei die Orientierungslichtquelle zumindest einen Teilbereich des Strahlungsbereichs des ersten Sensors und des Erfassungsbereichs des zweiten Sensors beleuchtet. Die Markierung des Strahlungsbereichs des ersten Sensors und des Erfassungsbereichs des zweiten Sensors durch die Orientierungslichtquelle ermöglicht es einem Benutzer, eine Bediengeste zielgerichteter auszuführen. Der Strahlungsbereich des ersten Sensors und der Erfassungsbereich des zweiten Sensors können somit identisch ausgeführt sein. Alternativ kann der Strahlungsbereich des ersten Sensors eine Teilfläche des Erfassungsbereichs des zweiten Sensors oder umgekehrt es kann der Erfassungsbereich des zweiten Sensors eine Teilfläche des Strahlungsbereichs des ersten Sensors sein. Durch eine zumindest teilweise Überlappung des Strahlungsbereichs und des Erfassungsbereichs ist eine zuverlässige Detektion von Gesten im Erfassungsbereich gewährleistet.

In einer weiteren bevorzugten Ausführungsform sind der Strahlungsbereich des ersten Sensors und der Erfassungsbereich des zweiten Sensors nach unten oder zu den Seiten oder nach hinten von dem Kraftfahrzeug aus weggerichtet und die Sensoreinrichtung ist ausgebildet, eine Bediengeste für die Betätigung einer Heckklappe des Fahrzeugs zu erfassen. Insbesondere dient die Bediengeste dem Öffnen und Schließen der Heckklappe des Fahrzeugs. Die Bediengeste kann beispielsweise eine Geste mit einem Fuß eines Benutzers des Kraftfahrzeugs in dem Strahlungsbereich des ersten Sensors sein, die als Bedienwunsch erkannt wird und eine elektrische Öffnung der Heckklappe des Kraftfahrzeugs auslöst.

In einer weiteren bevorzugten Ausführungsform sind die Lichtleiter, die mit dem ersten Sensor, dem zweiten Sensor bzw. der Orientierungslichtquelle der Sensoreinrichtung verbunden sind, flexibel. Dadurch können diese problemlos von der an dem ersten Bauteil des Kraftfahrzeugs befestigten Sensoreinrichtung zu einem zweiten Bauteil des Kraftfahrzeugs geführt werden.

Ein Ausführungsbeispiel der Erfindung ist in den Figuren dargestellt und wird nachfolgend erläutert. Es zeigen:
- Fig. 1: eine perspektivische Ansicht eines in einem Fahrzeug montierten Sensorsystems;
- Fig. 2: eine Unteransicht des in einem Fahrzeug montierten Sensorsystems;
- Fig. 3: eine perspektivische Ansicht von links des in einem Fahrzeug montierten Sensorsystems;
- Fig. 4a: eine Seitenansicht von rechts des in einem Fahrzeug montierten Sensorsystems;
- Fig. 4b: eine Schnittansicht entlang Linie A-A nach Fig. 4a;
- Fig. 5a: eine perspektivische Ansicht eines Sensorsystems;
- Fig. 5b: eine Detailansicht des Sensorsystems gemäß Fig. 5a;
- Fig. 6: eine schematische Rückansicht eines Kraftfahrzeugs mit einem Sensorsystem gemäß des Ausführungsbeispiels nach den Figuren 1 bis 5b;

In den Figuren sind identische Bauteile mit identischen Bezugszeichen versehen.

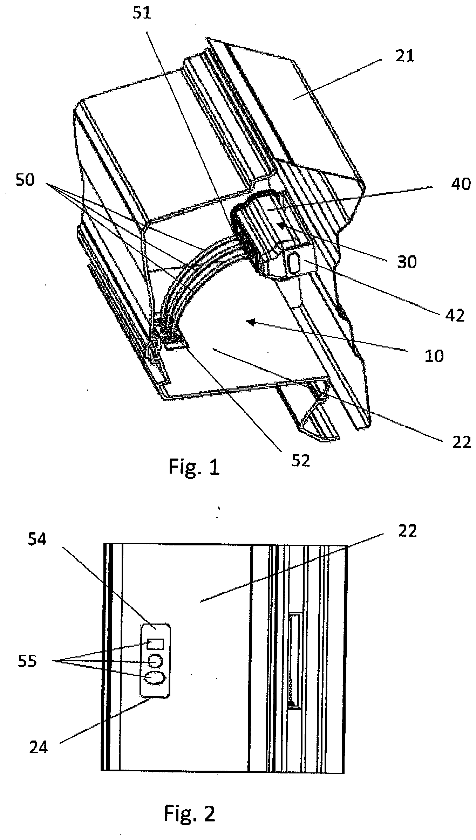

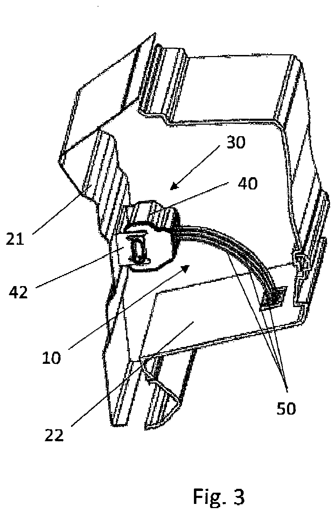

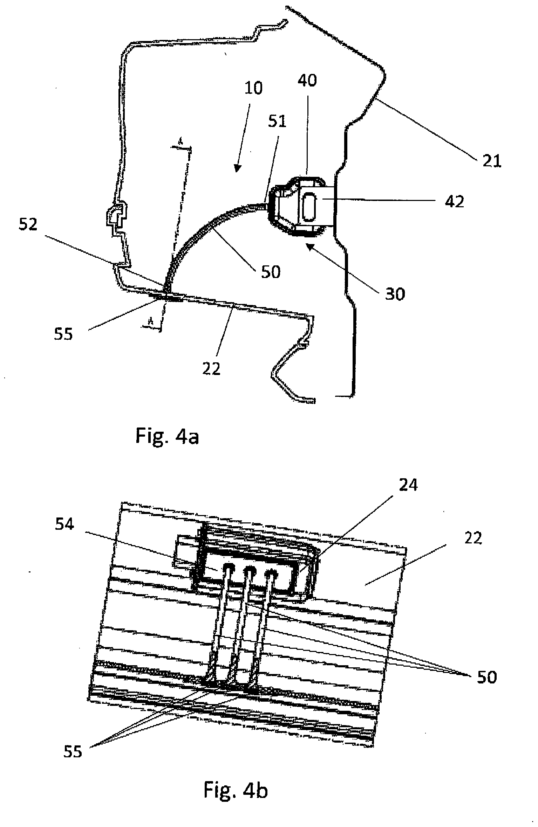

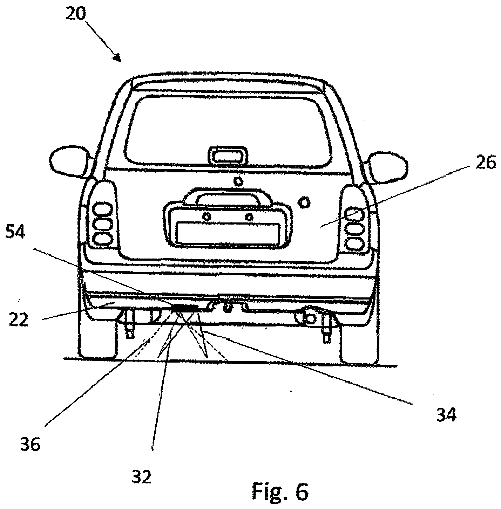

Wie schematisch in Fig. 1 bis Fig. 5b in verschieden Ansichten gezeigt umfasst das Sensorsystem 10 eine in einem Sensorgehäuse 40 unterbrachte Sensoreinrichtung 30 zum optischen Erfassen von Objekten und deren räumlichen Bewegungen und eine Halteeinrichtung 42 zum Aufnehmen des Sensorgehäuses 40 und zum Befestigen des Sensorgehäuses 40 an einem ersten Bauteil 21, beispielsweise eines in Fig. 6 gezeigten Kraftfahrzeugs 20. Das erste Bauteil 21 ist im Inneren des Kraftfahrzeugs 20 angeordnet. Das erste Bauteil 21 bildet in dem Ausführungsbeispiel ein Blech der Struktur des Fahrzeugs.

Die Sensoreinrichtung 30 weist einen ersten Sensor 31, einen zweiten Sensor 33 und eine Orientierungslichtquelle 35 auf, die in dem Sensorgehäuse 40 untergebracht sind. Der erste Sensor 31 und der zweite Sensor 33 sind optische Sensoren. Der erste Sensor 31 ist zur Ausgabe von Licht im nichtsichtbaren Infrarotbereich ausgebildet und der zweite Sensor 33 ist zum Empfang von Licht im nichtsichtbaren Infrarotbereich ausgebildet. Die Orientierungslichtquelle 35 ist zur Ausgabe von sichtbarem Licht ausgebildet und dient der für einen Benutzer sichtbaren Markierung auf dem Boden unter dem Fahrzeug, um den Erfassungsbereich des Sensors 33 kenntlich zu machen. Der erste Sensor 31 und der zweite Sensor 33 sind mit einer Steuereinrichtung (nicht gezeigt) gekoppelt, welche einen getakteten und zeitgesteuerten Betrieb des ersten Sensors 31 und des zweiten Sensors 33 ermöglicht.

Des Weiteren umfasst das Sensorsystem 10 flexible Leichtleiter 50, die jeweils ein erstes Ende 51 und ein zweites Ende 52, das dem ersten Ende 51 gegenüberliegt, aufweisen. Der erste Sensor 31, der zweite Sensor 33 und die Orientierungslichtquelle 35 sind jeweils mit einem ersten Ende 51 eines Lichtleiters 50 verbunden. Das zweite Ende 52 jedes Lichtleiters 50 ist derart an einem zweiten Bauteil 22 des in Fig. 6 gezeigten Kraftfahrzeugs 20 angeordnet, dass Licht aus dem Lichtleiter 50 in die äußere Umgebung des Kraftfahrzeugs 20 austreten kann bzw. aus der äußeren Umgebung des Kraftfahrzeugs 20 in den Lichtleiter 50 eintreten kann. Das zweite Ende 52 des Lichtleiters 50 ist flächenbündig mit einer nach außen zeigenden Oberfläche des zweiten Bauteils 22 des Kraftfahrzeugs 20 angeordnet. Das zweite Bauteil 22 befindet sich in dem dargestellten Ausführungsbeispiel am Heck des Fahrzeugs 20, wie in Fig. 6 gezeigt.

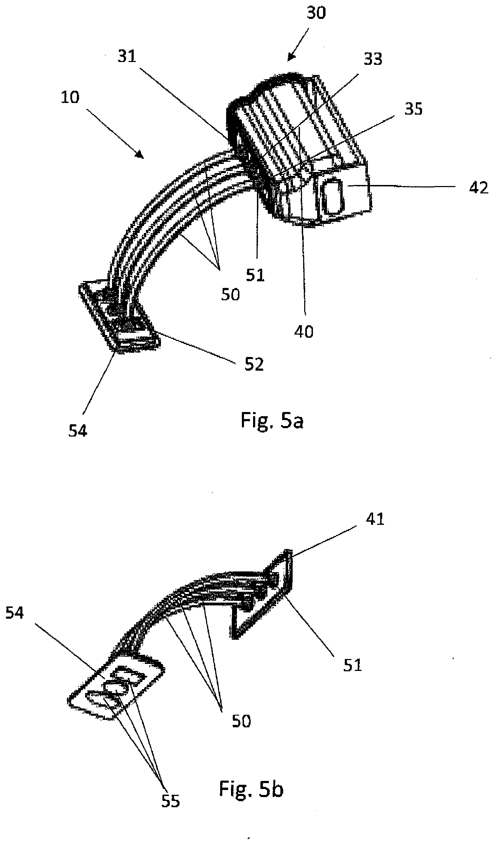

Dabei ist das zweite Ende 52 des Lichtleiters 50 von einer Platte 54 aufgenommen, die flächenbündig mit der nach außen zeigenden Oberfläche des zweiten Bauteils 22 des Kraftfahrzeugs 20 angeordnet ist, wie beispielsweise in Fig. 5a und 5b gezeigt. Das zweite Bauteil 22 weist eine Öffnung 24 auf, die für die Aufnahme der Platte 54 ausgebildet ist. Die Aufnahme der Platte 54 in der Öffnung 24 des zweiten Bauteils 22 erfolgt formschlüssig durch Einclipsen in entsprechenden Hinterschneidungen. Die Öffnung 24 ist in Bezug auf das Heck des Fahrzeugs 20 außermittig angeordnet.

Die Platte 54 weist die Sensoroptik 55 auf, die das aus dem zweiten Ende 52 eines Lichtleiters 50 austretende Licht verteilt und/oder das in das zweite Ende 52 eines Lichtleiters 50 eintretende Licht sammelt. Die Sensoroptik weist individuelle optische Linsen oder Linsenpakete für jeden verwendeten Lichtleiter auf. Die bereitgestellte Sensoroptik dient der Aufweitung, Sammlung, Umlenkung und/oder Fokussierung des austretenden bzw. des eintretenden Lichts. Insbesondere umfasst die Sensoroptik sowohl Beleuchtungsoptik wie auch Erfassungsoptik. Dabei kann die Sensoroptik 55 einen Querschnitt eines aus dem Lichtleiter 50 austretenden Lichtstrahls aufweiten, so dass ein breiter Strahlungs- oder Erfassungsbereich gebildet wird. Eingesetzt werden kann dabei eine einfache Kunststoffoptik oder auch eine Glasoptik, z.B. eine Sammellinse, Asphäre oder auch Fresnel-Linse. Alternativ können diffraktive optische Elemente die Sensoroptik 55 oder einen Teil davon bilden.

Wie der in Fig. 5b dargestellt ist ein Vorderteil 41 des Sensorgehäuses 40 von dem Sensorgehäuse 40 lösbar und als eine Platte ausgebildet. Das Vorderteil 41 des Sensorgehäuses 40 ist ausgebildet, um das erste Ende 51 des Lichtleiters 50 aufzunehmen. In der in Fig. 5b dargestellten Ausführungsform sind drei Lichtleiter 50 vorgesehen und somit ist das Vorderteil 41 des Sensorgehäuses 40 zur Aufnahme von drei ersten Enden 51 der drei Lichtleiter 50 ausgebildet. Dadurch ist es möglich, die Lichtleiter 50 mit der entsprechenden Sensoroptik 55 vorzumontieren und auf einfache Weise mit den jeweiligen Sensoren 31, 33 bzw. der Orientierungslichtquelle 35 zu verbinden.

Wie aus Fig. 6 ersichtlich weist der erste Sensor 31 einen Strahlungsbereich 32 und der zweite Sensor 33 einen Erfassungsbereich 34 auf, der dem Strahlungsbereich 32 des ersten Sensors 31 entspricht. Die Orientierungslichtquelle 35 beleuchtet dabei zumindest einen Teilbereich 36 des Strahlungsbereichs 32 des ersten Sensors 31 und des Erfassungsbereichs 34 des zweiten Sensors 33. Der Strahlungsbereich 32 des ersten Sensors 31 und der Erfassungsbereich 34 des zweiten Sensors 33 sind nach unten und leicht nach hinten von dem Kraftfahrzeug 20 in Richtung auf den Boden hinter dem Fahrzeug weggerichtet, sodass der Bereich auf einfache Weise für einen Benutzer mit einem Fuß erreichbar ist.

Die Sensoreinrichtung 30 ist ausgebildet, eine Bediengeste für die Betätigung der Heckklappe 26 des Fahrzeugs 20 zu erfassen. Dazu kann der Benutzer in dem ersten Erfassungsbereich 33 eine Geste mit seinem Fuß ausführen, die als Bedienwunsch erkannt wird und eine elektrische Öffnung der Heckklappe 26 des Kraftfahrzeuges 10 auslöst.

Die Orientierungslichtquelle 35 beleuchtet lichtstark den Strahlungsbereich 32 des ersten Sensors 31 und den Erfassungsbereich 34 des zweiten Sensors 33 und strahlt Licht im sichtbaren Spektrum ab. Ein Benutzer des Kraftfahrzeugs 20 kann den so markierten Strahlungsbereich 32 bzw. Erfassungsbereich 34 als beleuchteten Bereich auf dem Boden im Heckbereich des Kraftfahrzeugs 20 erkennen und kann nun zielgerichtet seinen Fuß in den durch das Licht markierten Bereich bewegen. Die Sensoreinrichtung 30 erfasst die Bediengeste und löst eine Betätigung der Heckklappe 26 aus. Die Markierung des Strahlungsbereichs 32 bzw. des Erfassungsbereichs 34 durch die Orientierungslichtquelle 35 erlaubt es, die Bediengeste zielgerichtet auszuführen. Die Markierung mittels der Orientierungslichtquelle 35 erfolgt ausschließlich zur Unterstützung des Benutzers, der die Bediengeste ausführt.

Die Ansteuerung, Auswertung sowie Versorgung der Sensoreinrichtung 30 erfolgt über einen einheitlichen Kabelbaum, wobei insbesondere eine Steckerverbindung zur Kopplung mit einem Kabelbaum vorgesehen ist.

In dem in den Figuren 1 bis 5b dargestellten Ausführungsbeispiel sind eine Orientierungslichtquelle 35 und zwei Sensoren 31, 33 sowie drei Lichtleiter 50 gezeigt, weitere Ausführungsformen mit beispielsweise mehr als einer Orientierungslichtquelle oder mehr als zwei Sensoren sind möglich. Vorzugsweise entspricht die Anzahl der Lichtleiter der Anzahl der Orientierungslichtquelle(n) und Sensoren.

In einer weiteren nicht dargestellten Ausführungsform kann die Sensoreinrichtung 30 eine 3D-Kamera aufweisen, die räumliche Daten mit einem Laufzeitverfahren erfasst, und die eine Pulslichtquelle und eine lichtsensitive Empfangseinrichtung umfasst, die jeweils mit einem Lichtleiter 50 verbunden sind. Die Orientierungslichtquelle 35 beleuchtet in diesem Fall zumindest einen Teilbereich eines Erfassungsbereichs der 3D-Kamera.

Fig. 6 zeigt eine schematische Darstellung eines Kraftfahrzeugs 20, das mit einem Sensorsystem 10 gemäß des in Bezug auf die Figuren 1 bis 5b erläuterten Ausführungsbeispiels der Erfindung ausgerüstet ist. Die im Inneren des Kraftfahrzeugs 20 angeordnete Sensoreinrichtung 30 und das erste Bauteil 21, an dem die Sensoreinrichtung 30 befestigt ist, sind in dieser Darstellung nicht sichtbar. Das zweite Bauteil 22 des Kraftfahrzeugs 20 ist in dieser Ausführungsform ein heckseitiger Stoßfänger, an dem das zweite Ende 52 jedes Lichtleiters 50 derart angeordnet ist, dass Licht nach unten aus dem Lichtleiter 50 in die äußere Umgebung des Kraftfahrzeugs 20 austreten kann und/oder von unten aus der äußeren Umgebung des Kraftfahrzeugs 20 in den Lichtleiter 50 eintreten kann. Der Ausdruck "nach unten" meint in diesem Zusammenhang in Richtung des Bodens und kann senkrecht nach unten sowie in einem Winkel nach unten beinhalten. Es ist jedoch auch möglich, dass das zweite Bauteil 22 ein heckseitiges Karosseriebauteil des Fahrzeugs 20 ist.

### Bezugszeichenliste

- 10: Sensorsystem
- 20: Kraftfahrzeug
- 21: erstes Bauteil
- 22: zweites Bauteil
- 24: Öffnung
- 26: Heckklappe
- 30: Sensoreinrichtung
- 31: erster Sensor
- 32: Strahlungsbereich des ersten Sensors 31
- 33: zweiter Sensor
- 34: Erfassungsbereich des zweiten Sensors 33
- 35: Orientierungslichtquelle
- 36: Beleuchtungsbereich der Orientierungslichtquelle 35
- 40: Sensorgehäuse
- 41: Vorderteil des Sensorgehäuses 40
- 42: Halteeinrichtung
- 50: Lichtleiter
- 51: erstes Ende des Lichtleiters 50
- 52: zweites Ende des Lichtleiters 50
- 54: Platte
- 55: Sensoroptik

## Patentansprüche

1. Sensorsystem (10) eines Kraftfahrzeugs (20) umfassend eine in einem Sensorgehäuse (40) untergebrachte Sensoreinrichtung (30) mit zumindest einer Orientierungslichtquelle (35) und einer Mehrzahl von Sensoren (31, 33) zum optischen Erfassen von Objekten und deren räumlichen Bewegungen und eine Halteeinrichtung (42) zum Aufnehmen des Sensorgehäuses (40) und zum Befestigen des Sensorgehäuses (40) an einem ersten Bauteil (21) des Kraftfahrzeugs (20), **dadurch gekennzeichnet, dass** die Orientierungslichtquelle (35) und jeder der Mehrzahl von Sensoren (31, 33) der Sensoreinrichtung (30) jeweils mit einem ersten Ende (51) eines Lichtleiters (50) verbunden ist und ein zweites Ende (52) des Lichtleiters (50), das dem ersten Ende (51) gegenüberliegt, derart an einem zweiten Bauteil (22) des Kraftfahrzeugs (20) angeordnet ist, dass Licht aus dem Lichtleiter (50) in die äußere Umgebung des Kraftfahrzeugs (20) austreten kann und/oder aus der äußeren Umgebung des Kraftfahrzeugs (20) in den Lichtleiter (50) eintreten kann.

2. Sensorsystem (10) nach Anspruch 1, **dadurch gekennzeichnet, dass** das erste Bauteil (21) des Kraftfahrzeugs (20) im Inneren des Kraftfahrzeugs (20) angeordnet ist.

3. Sensorsystem (10) nach Anspruch 1 oder Anspruch 2, **dadurch gekennzeichnet, dass** das erste Bauteil (21) des Kraftfahrzeugs (20) ein Blech der Struktur des Fahrzeugs (20) ist.

4. Sensorsystem (10) nach einem der vorherigen Ansprüche, **dadurch gekennzeichnet, dass** das zweite Ende (52) des Lichtleiters (50) flächenbündig mit einer nach außen zeigenden Oberfläche des zweiten Bauteils (22) des Kraftfahrzeugs (20) angeordnet ist.

5. Sensorsystem (10) nach einem der vorherigen Ansprüche, **dadurch gekennzeichnet, dass** das zweite Ende (52) des Lichtleiters (50) von einer Platte (54) aufgenommen ist, die flächenbündig mit der insbesondere nach außen zeigenden Oberfläche des zweiten Bauteils (22) des Kraftfahrzeugs (20) angeordnet ist.

6. Sensorsystem (10) nach Anspruch 5, **dadurch gekennzeichnet, dass** die Platte (54) eine Sensoroptik (55) aufweist, die das aus dem zweiten Ende (52) des Lichtleiters (50) austretende Licht verteilt und/oder das in das zweite Ende (52) des Lichtleiters (50) eintretende Licht sammelt.

7. Sensorsystem (10) nach Anspruch 5 oder Anspruch 6, **dadurch gekennzeichnet, dass** das zweite Bauteil (22) eine Öffnung (24) aufweist, die für die Aufnahme der Platte (54) ausgebildet ist.

8. Sensorsystem (10) nach Anspruch 7, **dadurch gekennzeichnet, dass** sich das zweite Bauteil (22) am Heck des Fahrzeugs (20) befindet und wobei die Öffnung (24) in Bezug auf das Heck des Fahrzeugs (20) mittig oder außermittig angeordnet ist.

9. Sensorsystem (10) nach einem der vorherigen Ansprüche, **dadurch gekennzeichnet, dass** das zweite Bauteil (22) des Kraftfahrzeugs (20) ein heckseitiger Stoßfänger oder ein heckseitiges Karosseriebauteil ist, an dem das zweite Ende (52) des Lichtleiters (50) derart angeordnet ist, dass Licht insbesondere nach unten aus dem Lichtleiter (50) in die äußere Umgebung des Kraftfahrzeugs (20) austreten kann und/oder insbesondere von unten aus der äußeren Umgebung des Kraftfahrzeugs (20) in den Lichtleiter (50) eintreten kann.

10. Sensorsystem (10) nach einem der vorherigen Ansprüche, **dadurch gekennzeichnet, dass** die Sensoreinrichtung (30) eine Orientierungslichtquelle (35), die Licht im sichtbaren Bereich ausgibt, einen ersten Sensor (31), der Licht im nichtsichtbaren Bereich, insbesondere im Infrarotbereich, ausgibt, und einen zweiten Sensor (33) zum Empfangen von reflektiertem Licht im nichtsichtbaren Bereich, insbesondere im Infrarotbereich, umfasst, wobei die Orientierungslichtquelle (35), der erste Sensor (31) und der zweite Sensor (33) jeweils mit einem Lichtleiter (50) verbunden sind.

11. Sensorsystem (10) nach Anspruch 10, **dadurch gekennzeichnet, dass** der erste Sensor (31) einen Strahlungsbereich (32) aufweist und der zweite Sensor (33) einen Erfassungsbereich (34) aufweist, der vollständig oder teilweise dem Strahlungsbereich (32) des ersten Sensors (31) entspricht, wobei die Orientierungslichtquelle (35) zumindest einen Teilbereich (36) des Strahlungsbereichs (32) des ersten Sensors (31) und des Erfassungsbereichs (34) des zweiten Sensors (33) beleuchtet.

12. Sensorsystem (10) nach Anspruch 11, **dadurch gekennzeichnet, dass** der Strahlungsbereich (32) des ersten Sensors (31) und der Erfassungsbereich (34) des zweiten Sensors (33) nach unten, zu den Seiten und/oder nach hinten von dem Kraftfahrzeug (20) weg gerichtet sind und wobei die Sensoreinrichtung (30) ausgebildet ist, eine Bediengeste für die Betätigung einer Heckklappe (26) des Fahrzeugs (20) zu erfassen.
